# EUROPEAN PATENT APPLICATION

(11) **EP 3 881 682 A1**
(43) Date of publication of application: **22.09.2021**
(21) Application number: 20305289.9
(22) Date of filing: 20.03.2020
(51) Int. Cl.: A23J 1/00

(54) **METHOD FOR SEPARATING INSECTS INTO TWO DISTINCT VALUABLE FRACTIONS**

(71) Applicant: Protearth, 02600 Mortefontaine (FR)
(72) Inventor: MOREAU, Marc, Yves, Xavier, Michel, 02120 LANDIFAY-ET-BERTAIGNEMONT (FR); POTTIER, Charlène, Yvonne, Marguerite, 95290 L'ISLE ADAM (FR)

(57) **Abstract**

The present invention concerns a method for processing insects, in particular adult insects, more particularly a method for separating insects into a chitin-rich fraction and a protein- and lipid-rich fraction, said method comprising (a) dehydrating insects, in particular adult insects, to be processed, wherein said insects have not be submitted to a prior extraction step; (b) fragmenting said dehydrated insects thereby obtaining a mixture of insect parts, (c) dry separating by air flow the fraction of the mixture of insect parts constituted of small insect parts (called fine fraction) from the fraction of the mixture of insect parts constituted of the rest of insect bodies (called heavy fraction), according to the capacity to be elevated by said air flow and optionally the volume of said insect parts; and (d) collecting each of said two fractions obtained by dry separation.

The present invention further concerns facility for implementing the processing method according to the invention, said facility comprising at least (i) an insect provider device, (ii) a dehydrating device, (iii) optionally a fragmenting device, (iv) a dry separator by air flow, and (v) a collecting device.

## Description

The present invention concerns methods for obtaining valuable enriched fractions from insects.

Nowadays, biotechnology and health industries are faced to major environmental issues. Producing biobased products, recycling and valorizing byproducts are a first step towards an industry which respects environment.

Valorizing insects is a recent way to produce valuable molecules while respecting environment. For example, the Protearth company produces protein powder and oil from insects which are typically used as feed for fish farming. It is also possible to produce chitin from insects which is typically used in green chemistry.

However, using natural sources for producing valuable molecules does not avoid the use of solvents during the different transformation steps nor the use of a high amount of energy.

Protein and lipid extractions are the two main transformations performed on insects, generally at the larva stage.

Transformation can be mechanical, for example by pressing larvae in order to collect the protein fraction and the oil fraction. Such a transformation is quite cheap but the purity of the products by this transformation and the value of the final products are quite low. Moreover some molecules, such as chitin, are not efficiently valorized by this method because they are still part of the protein fraction, and even tend to decrease the quality of the protein fraction.

Another type of transformation include the combination of mechanical transformations followed by chemical and/or enzymatic transformations. For example, the protein cake obtained by the mechanical transformation mentioned above can be treated chemically or enzymatically, which enables extracting chitin which is still present in said protein fraction. However, chemical and enzymatic transformations have both severe drawbacks. Chemical transformation is quite harmful for environment and tends to destroy proteins. On the contrary, enzymatic transformation enables maintaining proteins (and thereby valorizing said proteins) but only produces chitin with low purity, which is of low interest for green chemistry.

There is thus an important need for new methods which enable producing valuable molecules from natural sources with a high purity and a high yield, while being ecological, in particular by limiting the use of harmful solvents and having low cost in energy.

The present invention meets this need.

Previous searches from the inventors demonstrated that insects are mainly constituted of proteins, oil and chitin, and that chitin is mainly located in exoskeleton, tracheas, wings and legs of insects.

The present invention results from the unexpected finding by the inventors that it is possible to mechanically separate the parts of insects which are rich in chitin, in particular wings and legs, from the rest of the bodies, and thereby obtaining two enriched fractions which are both valuable after transformation, namely a fraction rich in chitin and a fraction rich in proteins and oil.

The present invention thus concerns a method for processing insects, in particular adult insects, more particularly a method for separating insects into a chitin-rich fraction and a protein- and lipid-rich fraction, said method comprising:
(a) dehydrating insects, in particular adult insects, to be processed, wherein said insects have not be submitted to a prior extraction step;
(b) fragmenting said dehydrated insects thereby obtaining a mixture of insect parts,
(c) dry separating by air flow the fraction of the mixture of insect parts constituted of small insect parts (called fine fraction) from the fraction of the mixture of insect parts constituted of the rest of insect bodies (called heavy fraction), according to the capacity to be elevated by said air flow and optionally the volume of said insect parts; and
(d) collecting each of said two fractions obtained by dry separation.

The present invention further concerns facility for implementing the processing method according to the invention, said facility comprising at least:
(i) an insect provider device,
(ii) a dehydrating device,
(iii) optionally a fragmenting device,
(iv) a dry separator by air flow, and
(v) a collecting device.

### Detailed description of the invention

### Method

The method for processing insects according to the invention typically comprises the followings steps:
(a) a step of dehydrating insects to be processed, wherein said insects have not be submitted to a prior extraction step;
(b) a step of fragmenting said dehydrated insects thereby obtaining a mixture of insect parts, wherein said fragmenting step can be performed simultaneously with the dehydrating step and/or the dry separating step,
(c) a step of dry separating by air flow the fraction of the mixture of insect parts constituted of small insect parts (called fine fraction) from the fraction of the mixture of insect parts constituted of the rest of insect bodies (called heavy fraction), according to the capacity to be elevated by said air flow and optionally the volume of said insect parts; and
(d) a step of collecting each of said two fractions obtained at step (c).

### Insects

By "insects" is meant herein the class of hexapod invertebrate, constituted of a chitinous exoskeleton, a three-part body (head, thorax and abdomen), three pairs of jointed legs, compound eyes and one pair of antennae. Insects are typically divided into two subclasses: wingless insects, also called Apterygota, and winged insects, also called Pterygota.

In a particular embodiment, insects to be processed are winged insects.

Examples of winged insects include insects of the Ephemeroptera order, insects of the Odonata order, insects of the Plecoptera order, insects of the Embioptera order, insects of the Zoraptera order, insects of the Dermaptera order, insects of the Orthoptera order, insects of the Phasmatodea order, insects of the Notoptera order, insects of the Blattodea order, insects of the Mantodea order, insects of the Alienoptera order, insects of the Psocoptera order, insects of the Thysanoptera order, insects of the Phthiraptera order, insects of the Hemiptera order, insects of the Hymenoptera order, insects of the Coleoptera order, insects of the Strepsiptera order, insects of the Raphidioptera order, insects of the Megaloptera order, insects of the Neuroptera order, insects of the Mecoptera order, insects of the Siphonaptera order, insects of the Diptera order, insects of the Trichoptera order and insects of the Lepidoptera order.

In a particular embodiment, insects to be processed according to the invention are insects of the Diptera order, typically flies, more particularly insects of the *Drosophila* genera, still particularly insects of the *Drosophila melanogaster* species.

As well-known from the skilled person, the insect life cycle has several successive physical transformation stages. Generally, the insect life cycle include a larvae stage or a juvenile stage, before an adult stage.

In a preferred embodiment, insects to be processed according to the invention are adult insects, *i.e.* insects which are at the adult stage of their life cycle.

### Dehydrating step

The method of the invention comprises dehydrating insects to be processed, as defined above.

By "dehydrating" or "dehydration" is meant herein the water loss of a product.

Dehydration can be implemented using any technique well-known from the skilled person, for example by drying, in particular by fluidized bed drying, anhydrous use, freeze-drying, or by microwave dehydration.

In a particular embodiment, said dehydration step is performed by drying, in particular by fluidized bed drying, typically at a temperature lower than 200°C and preferably higher than 15°C, more preferably higher than 30°C, more particularly at a temperature of between 60°C and 100°C, in particular for 5 min to 24 h, more particularly for 5 min to 1h, still particularly for 10 min to 30 min, typically until reaching a moisture content of less than 15%, more particularly of 5%.

Said dehydration step can be implemented using any dehydrator device well-known from the skilled person.

Examples of suitable dehydrator devices include fluidized bed dryers, continuous disc dryers, continuous blade dryers, conical screw-type dryers, conical blade dryers, tray dryers, tray freeze-dryers, active freeze-dryers, and microwave dehydrators.

In a particular embodiment, said dehydrating step is performed using a fluidized bed dryer.

The insects, as defined above, to be processed in the dehydrating step (a) of the method of the invention have not been submitted to prior extraction step.

By "prior extraction step" is meant herein any mechanical or chemical transformation step leading to the voluntary removal of a substance, group of substances, or body part, from the insect to be processed.

### Fragmenting step

The method of the invention further comprises fragmenting the dehydrated insects thereby obtaining a mixture of insect parts. Said fragmentation typically aims at separating said insects into identifiable parts, detached the one from the others. While said identifiable parts can typically be insect parts which are divided in multiple pieces, fragmentation preferably does not lead to the production of a powder.

By "fragmenting" or "fragmentation" is meant herein the transformation by which an object is divided in a number of parts of lower size.

Said fragmentation can be obtained during dehydration, as defined above, and/or dry separation, as defined below. Indeed, the dehydrating and/or dry separating devices can, when operating, induce a division of the insects to be processed into multiple parts, for example because of the movement of the insects in said devices.

Alternatively or additionally, said fragmentation can be performed during a step, which is specifically dedicated to said fragmentation, between dehydration and dry separation.

In said particular embodiment, fragmentation can be implemented by any technique well-known from the skilled person, for example, by crushing, milling or grinding.

In a particular embodiment, said fragmentation step is implemented by crushing.

Fragmentation can be performed using any suitable fragmenting device, such as a disc mill, stamp mill, ball mill, rod mill or tower mill.

In a particularly preferred embodiment said fragmentation step is performed by crushing, using a disc mill.

Fragmentation in the method of the present invention enables obtaining a mixture of insect parts.

By "mixture of insect parts" is meant herein a mixture of separate body parts of insects, namely a mixture of legs, wings, antennas, buccal apparatus, bristles, removable cuticles, heads, abdomens, thoraxes and/or of portions thereof.

### Separating step

The method of the invention further comprises dry separating by air flow the fraction of the mixture of insect parts constituted of small insect parts (called fine fraction) from the fraction of the mixture of insect parts constituted of the rest of insect bodies (called heavy fraction), according to the capacity to be elevated by said air flow and/or the volume of said insect parts.

By "dry separation" or "dry separating" is meant herein a separation which does not involve the use of any liquid, in particular any solvent, and which only uses mechanical techniques.

Dry separation methods can basically be separated into three main types of mechanical separation procedures: separation by airflow, screening and specific-gravity separation. In the context of the invention, the dry separation step is a dry separation by airflow.

By "dry separation by air flow" or "air separation" is meant herein separation which is based on the use of a specific airflow through which the matters to be separated are placed.

In the context of the invention, the step of dry separating by airflow is performed according to the capacity to be elevated by said air flow and optionally volume of the insects parts.

As will be understood by the skilled person, the "capacity to be elevated by said air flow" will depend on the density of said insect parts, but also on other factors such as the wind surface area of said insect parts.

The dry separation by airflow of the invention enables separating the small insects parts, typically constituted of insect wings, legs, antennas, buccal apparatus, bristles and removable cuticles, from the insects parts constituted of the rest of insect bodies, according to their capacity to be elevated by said air flow and optionally volume.

The insect parts having the best capacity to be elevated by said air flow (typically being the least dense and/or having the highest wind surface area) and optionally the smallest volume will be typically separated as a fine fraction and will typically correspond to the parts constituted of wings, legs, antennas, buccal apparatus, bristles and removable cuticles.

The insect parts having the worse capacity to be elevated by said air flow (typically being the densest and/or having the lowest wind surface area) and optionally the highest volume will be typically separated as a heavy fraction and will typically correspond to the parts constituted of the rest of insect bodies.

In a particular embodiment, said separating step is performed according to said insect parts capacity to be elevated by said air flow.

Dry separators enabling separating insect parts according to their capacity to be elevated by said air flow can be suitably determined by the skilled person and include zigzag airflow separators, densimetric tables and densimetric columns.

In a particular embodiment, said separating step is implemented using a zigzag airflow separator.

Typically, in zigzag separators, the airflow required for separation is blown through the separation channel from button to top. Light material is carried by the airflow up stream in to cyclone and through rotary sack in to sack on to the next conveyor. Heavy material cannot be carried by the airflow and falls through the airflow and is discharged through the separator base. The light material transported by the airflow to the cyclone gets separated there and is discharged via rotary gate valve.

In the present case, the mixture of insect parts can typically be injected into the zigzag separator and an air current can typically flow through said mixture. The insect parts having the lowest capacity to be elevated by said air flow (for example heads, thorax and abdomens), which will constitute the heavy fraction, will typically fall through the flow because said flow is not strong enough to raise them, and will for example be collected below the airflow-providing buzzle. The insect parts having the highest capacity to be elevated by said air flow (for example wings, legs, antennas, buccal apparatus, bristles and removable cuticles), which will constitute the fine fraction, will typically be raised by the airflow and for example collected in an upper compartment.

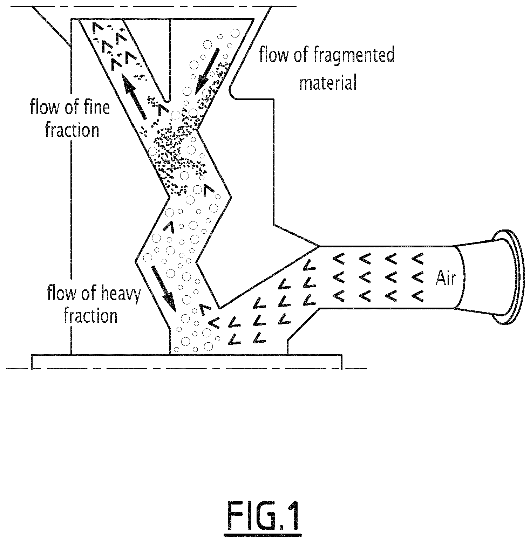

**Figure 1** shows a scheme of the way a zigzag separator typically functions.

In another particular embodiment, said separating step is performed according to said insect parts capacity to be elevated by said air flow and volume.

Dry separators enabling separating insect parts according to their capacity to be elevated by said air flow and volume can be suitably determined by the skilled person and include turbo separators.

In a particular embodiment, said separating step is implemented using a turbo separator.

Typically, the mixture of insect parts is injected into the turbo separator and is submitted to an airflow going up to a selective wheel. Said selective wheel enables typically selected said insect parts according to their size and/or volume. Said airflow typically enables separating said insects parts according to their capacity to be elevated by said air flow. The insect parts having the lowest capacity to be elevated by said air flow, which will constitute the heavy fraction, will typically fall through the airflow down to the tank bottom, whereas the insect parts having the highest capacity to be elevated by said air flow will be raised up to and through the selective wheel, and will constitute the fine fraction.

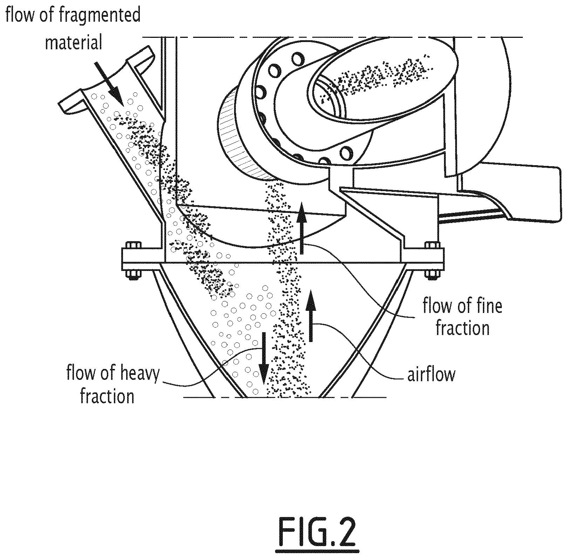

**Figure 2** shows a scheme of the way a turbo separator functions.

**Figure 3** is a photograph showing an example of the fine and heavy fractions obtained at the end of the separation step.

In a particular embodiment, the method of the invention is for separating insects into a chitin-rich fraction and a protein- and lipid-rich fraction.

By "chitin-rich fraction" is meant herein a fraction of insect parts, as defined above, which comprises a high quantity of chitin but low amounts of proteins and lipids.

As well-known from the skilled person, chitin is a polymer of β-1,4-(2-deoxy-2-acetamidoglucose) that may be extracted from the exoskeletons of insects and arthropods, such as crabs, lobsters and shrimps, and cell walls of fungi and yeast.

In a particular embodiment, the fine fraction obtained at the end of the separating step (c) is a chitin-rich fraction.

In a particular embodiment, said fine fraction may further comprise valuable amounts of other molecules of interest.

Therefore, in a particular embodiment, said fine fraction is enriched in chitin and optionally in other molecules of interest.

By "molecule of interest" is meant herein a molecule, which is not chitin, protein or lipid, but which is of value in the chemistry, biotechnology, food industry and/or agriculture field.

Examples of molecules of interest include waxes, pigments and polysaccharides other than chitin.

By "protein- and lipid-rich fraction" is meant herein a fraction of insect parts, as defined above, which comprises high quantities of proteins and lipids by low amounts of chitin.

In a particular embodiment, the heavy fraction obtained at the end of the separating step (c) is protein- and lipid-rich fraction.

Therefore, in a particular embodiment, said heavy fraction is enriched in proteins and lipids.

### Collecting step

The method of the invention further comprises collecting each of said two fractions obtained by dry separation.

The collection of said fractions can be implemented by any technique well-known from the skilled person.

In particular, said fractions can be collected in collector tanks located at the end of the separator devices used in separation step.

### Additional transformation step

In a particular embodiment, the method of the invention further comprises, after said collecting step, a step of transforming at least one of the collected fraction mechanically, chemically, enzymatically and/or by fermentation.

Said additional transformation step has typically the advantage of enabling a better extraction and/or purification of specific components of the collected fraction and/or enabling an efficient production of specific compounds using the collected fraction as starting material.

Therefore, in the context of the invention, said additional transformation step can be an extraction step, a purification step, a washing step, a concentration step, a production step, and/or a combination of said steps.

As indicated above, the method of the invention enables obtaining a chitin-rich fraction which is poor in proteins and oils. Such a fraction is particularly useful to produce efficiently very pure chitin. Furthermore, as indicated above, said fine fraction can also comprise other molecules of interest as defined above.

Accordingly, in a particular embodiment, said transformation step is a step of purifying chitin and optionally other molecules of interest from the collected fine fraction .

As indicated above, the method of the invention enables obtaining a protein- and lipid-rich fraction which is poor in chitin. Such a fraction is particularly useful to produce efficiently protein cake and oil.

Accordingly, in a particular embodiment, said transformation step is a step of producing protein cake and/or oil from the collected heavy fraction .

### Facility

The present invention also concerns a facility for implementing the processing method of the invention, said facility comprising at least:
(i) an insect provider device,
(ii) a dehydrating device,
(iii) optionally a fragmenting device,
(iv) a dry separator by airflow, and
(v) a collecting device.

By "insect provider device" is meant herein a device wherein insects can be stored and from which said insects can be injected into the dehydrating device.

Typically said insect provider device is a tank preferably connected to the dehydrating device by a tube, optionally equipped with a means of closing.

Said dehydrating device may be as defined in the section *"Method"* above. In a particular embodiment, said dehydrating device is a fluidized bed dryer.

Said fragmenting device may be as defined in the section *"Method"* above. In a particular embodiment, said fragmenting device is a disc mill.

Said dry separator by airflow may be as defined in the section *"Method"* above. In a particular embodiment, said dry separator is a zigzag airflow separator or a turbo separator.

Said collecting device may typically be a tank including two separate compartments or two separate tanks, each compartment or each tank being preferably connected to the dry separator by a tube, optionally equipped with means of closing.

In a particular embodiment, in the facility of the invention, said dehydrating device (ii) is a fluidized bed dryer and said dry separator (iv) is a zigzag airflow separator or a turbo separator. In another particular embodiment, in the facility of the invention, said dehydrating device (ii) is a fluidized bed dryer, said fragmenting device (iii) is a disc mill, and said dry separator (iv) is a zigzag airflow separator or a turbo separator.

In a particular embodiment, said devices (i) to (v) are operatively associated the one with the other. In other words, in a particular embodiment, said insect provider device is operatively associated with the dehydrating device, which is operatively associated with the fragmenting device, which is operatively associated with the dry separator, which is operatively associated with the collecting device.

By "operatively associated with" is meant herein that there is direct contact between the devices or the devices are directly connected.

In said embodiment, the facility thus enables implementing the method of the invention is continuous mode.

In an alternative embodiment, only some of the devices of the facility of the invention are operatively associated the one with the other. For example, said insect provider device is operatively associated with the dehydrating device, and the dry separator is operatively associated with the collecting device.

In such embodiment, the facility of the invention can include between said devices (i) to (v), storage tanks.

The present invention will be further illustrated by the example below.

### Example

The inventors used 2 kg of *Drosophila melanogaster,* each insect having an average weight of 0.5 mg.

Said insects were dehydrated using a fluidized bed dryer (Retsch), at a temperature comprised between 60°C and 100°C, with an air flow of 2.2 m/s to 3.3 m/s.

The dehydrated insects were then fragmented into a Cemotec disc mill (FOSS).

The fragmented insects were then introduced into a turbo separator (Hosokawa-Alpine) with an air flow of 80 m³/h to 100 m³/h, and a rotation speed of the separator of 2000 to 3000 rpm.

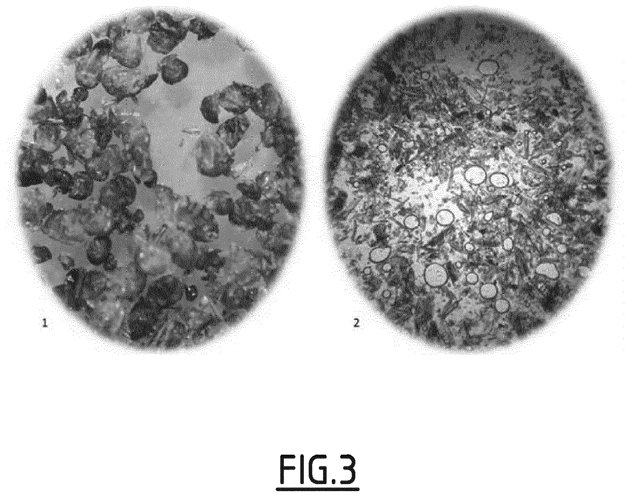

The two fractions obtained after said separation are showed on Figure 3 (1: heavy fraction, 2: fine fraction).

The heavy fraction comprised 2% chitin, 18% lipids and 65% proteins, while the fine fraction comprised 12% chitin, 6% lipids and 45% proteins.

This example thus demonstrates that it is possible, using the method of the invention, separating insect parts into a chitin-rich fraction (the fine fraction) and a protein- and lipid-rich fraction (the heavy fraction).

## Claims

1. A method for processing insects, in particular adult insects, said method comprising:
(a) dehydrating insects to be processed, wherein said insects have not be submitted to a prior extraction step;
(b) fragmenting said dehydrated insects, thereby obtaining a mixture of insect parts,
(c) dry separating by airflow the fraction of the mixture of insect parts constituted of small insect parts (called fine fraction) from the fraction of the mixture of insect parts constituted of the rest of insect bodies (called heavy fraction), according to the capacity to be elevated by said air flow and optionally the volume of said insect parts; and
(d) collecting each of said two fractions obtained by dry separation.

2. The method according to claim 1, wherein said dehydration is performed by drying at a temperature lower than 200°C, preferably using a fluidized bed dryer.

3. The method according to claim 1 or 2, wherein said fragmentation is obtained during dehydration and/or dry separation.

4. The method according to any one of claims 1 to 3, wherein said separation is performed according to said insect parts capacity to be elevated by said air flow.

5. The method according to claim 4, wherein said separation is performed using a zigzag airflow separator.

6. The method according to any one of claims 1 to 3, wherein said separation is performed according to said insect parts capacity to be elevated by said air flow and said insect parts volume.

7. The method according to claim 6, wherein said separation is performed using a turbo separator.

8. The method according to any one of claims 1 to 7, for separating insects into a chitin-rich fraction and a protein- and lipid-rich fraction.

9. The method according to claim 8, wherein said fine fraction is enriched in chitin and optionally in other molecules of interest.

10. The method according to claim 8 or 9, wherein said heavy fraction is enriched in proteins and lipids.

11. The method according to any one of claims 1 to 10, further comprising, after said collection, the transformation of at least one of the collected fraction, mechanically, chemically, enzymatically and/or by fermentation.

12. The method according to claim 11, wherein said transformation is a step of purifying chitin and optionally other molecules of interest from the collected fine fraction.

13. The method according to claim 11, wherein said transformation is a step of producing protein cake and/or oil from the collected heavy fraction.

14. A facility for implementing the processing method according to any one of claims 1 to 13, said facility comprising at least:
(i) an insect provider device,
(ii) a dehydrating device,
(iii) optionally a fragmenting device,
(iv) a dry separator by air flow, and
(v) a collecting device.

15. The facility according to claim 14, wherein:
- said dehydrating device (ii) is a fluidized bed dryer, and
- said dry separator (iv) is a zigzag airflow separator or a turbo separator.
